# EUROPÄISCHE PATENTANMELDUNG

(11) **EP 1 355 183 A2**
(43) Veröffentlichungstag der Anmeldung: **22.10.2003**
(21) Anmeldenummer: 03004613.0
(22) Anmeldetag: 01.03.2003
(51) Int. Cl.: G02B 23/16

(54) **Teleskop**

(30) Priorität: 16.04.2002 DE 10216993
(71) Anmelder: Hensoldt AG, 35576 Wetzlar (DE)
(72) Erfinder: Müller, Norbert, 35614 Asslar (DE); Polzer, Gerd, 35586 Wetzlar-Hermannstein (DE); Claudi, Volker, 35633 Lahnau-Dorlar (DE)
(74) Vertreter: Golla, Anke

(57) **Zusammenfassung**

Teleskop mit einer durch die optischen Elemente des Teleskops festgelegte optische Achse umfassend ein Okular, ein Objektiv und eine erste Fokussieroptik, die entlang der optischen Achse zum Fokussieren verschiebbar gelagert ist, wobei das Teleskop eine zweite Fokussieroptik, die zum Fokussieren entlang der optischen Achse verschiebbar gelagert ist, aufweist.

## Beschreibung

Die Erfindung betrifft ein Teleskop, umfassend ein Okular, ein Objektiv und einer zwischen Okular und Objektiv angeordneten, axial verschiebbaren Fokussieroptik.

Aus der DE 42 31 655 C1 ist ein monokulares Fernrohr bekannt, das ein Okular, ein Objektiv und eine zwischen dem Okular und Objektiv angeordnete Fokussieroptik aufweist. Weiterhin ist dieses Fernrohr mit einem Betätigungselement versehen, das über ein Schaltgetriebe mit der Fokussieroptik verbindbar ist. Durch Wahl einer der Getriebeübersetzungen ist die Geschwindigkeit wählbar, mit der die Fokussieroptik in Richtung der optischen Achse bei identischer Bewegung des Betätigungselementes bewegt wird.

Aus dem Firmenprospekt der Firma Leica von 1998 mit der Bestellnummer der Ausgabe 910596 ist ein Spektiv bzw. ein monokulares Fernrohr bekannt, das zur Einstellung der Fokussierung einen Grobtrieb und einen Feintrieb zur Fokussierung auf Entfernung zwischen 3,95 m und ∞ aufweist.

Aus der US 4,249,793 ist ein Teleskop, das sich sowohl auf binokulare als auch auf monokulare Teleskope bezieht, bekannt. Dem aus dieser Schrift bekannten Teleskop lag die Aufgabe zugrunde, ein Teleskop mit einer veränderbaren Vergrößerung mit verbesserten optischen Eigenschaften bereitzustellen. Diese Aufgabe wurde dadurch gelöst, dass anstelle der Veränderung der Vergrößerung mittels des Okulars eine axial verschiebbare Linse vorgesehen ist, die in Richtung von Objektiv zu Okular hinter dem Objektiv angeordnet ist. Die Objektivgruppe L11 ist eine Fokussiergruppe und ist somit auch in axialer Richtung verschiebbar gelagert.

Hinter der für die Einstellung der Vergrößerung axial verschiebbaren Linse L12 ist eine Prismenanordnung zu Bildaufrichtung vorgesehen. Hinter der Prismenanordnung ist eine Kompensationsgruppe angeordnet, die mit der Linse zur Veränderung der Vergrößerung zusammen in axialer Richtung verschoben wird. Nach der Kompensationsgruppe ist eine Blende und ein Okular angeordnet.

Aus der DE 42 44 161 A1 sind Binokulare bekannt, deren Vergrößerung mittels eines Variookulars verstellbar ist. Bei der Verstellung der Vergrößerung wird ein Fokussierzustand nicht verändert. Weiterhin weisen die Binokulare eine Fokussierung auf, die mittels in den Objektiven axial verschiebbaren Linsen durchgeführt wird. Mit der Fokussierung ist ein Dioptrienausgleich gekoppelt, wobei dann eine axial verschiebbaren Linsen in axialer Richtung verschoben wird und die weitere in dem zweiten Objektiv des Binokulars für die Fokussierung angeordnete Linse ihre Position nicht verändert.

Für die Fokussierung ist ein motorischer Auftrieb der durch Druckbetätigung des Scharfeinstellschalters betätigt werden kann.

Für die Einstellung der Vergrößerung kann sowohl ein motorischer als auch ein manueller Antrieb vorgesehen sein. Die motorischen Antriebe sind jeweils mit einer Rutschkupplung versehen, um eine Überlastung der Mechanik zu vermeiden. Die Vergrößerungseinstellung ist mit einer lösbaren Kupplung versehen, so dass eine manuelle Einstellung der Vergrößerung zum Einstellen der gleichen Vergrößerungen der beiden Teleskopsysteme des Binokulars möglich ist. Dabei handelt es sich um einen Justiervorgang.

Der Erfindung liegt die Aufgabe zugrunde den Bereich, auf den fokussiert werden kann, zu vergrößern.

Weiterhin liegt der Erfindung die Aufgabe zugrunde ein schnelles hin und her Schalten zwischen einer Fokussierung auf eine große Entfernung und einer Fokussierung auf eine nahe Entfernung zu ermöglichen.

Die Aufgabe der Erfindung wird durch die im Patentanspruch 1 gegebenen Merkmale gelöst. Durch die Maßnahme ein Teleskop mit einer erster Fokussieroptik und einer zweiten Fokussieroptik zu versehen, konnte der Fokussierbereich des Teleskops vergrößert werden. Durch die erste Fokussieroptik wird ein erster Fokussierbereich begründet und durch die zweite Fokussieroptik wird ein zweiter Fokussierbereich begründet, wobei durch die Existenz dieser beiden Fokussierbereiche nebeneinander, die Vergrößerung eines aus diesen beiden Fokussierbereichen resultierenden Fokussierbereiches resultiert. Die erste und die zweite Fokussieroptik ist entlang der optischen Achse verschiebbar gelagert. Durch verschieben der ersten und/oder der zweiten Fokussieroptik entlang der optischen Achse kann eine Fokussierung vorgenommen werden.

In einer vorteilhaften Ausführungsform ist es vorgesehen, eine der Fokussieroptiken zwischen Okular und Objektiv anzuordnen.

Weiterhin hat es sich als vorteilhaft herausgestellt, eine der Fokussieroptiken im Objektiv anzuordnen.

Weiterhin kann es vorteilhaft sein, eine der Fokussieroptiken im Okular anzuordnen.

Insbesondere hat es sich als vorteilhaft herausgestellt, die zweite Fokussieroptik entweder im Objektiv oder im Okular anzuordnen.

Es hat sich als vorteilhaft herausgestellt, der ersten Fokussieroptik ein erstes Bedienelement und der zweiten Fokussieroptik ein zweites Bedienelement zuzuordnen.

In einer vorteilhaften Ausgestaltung, ist das zweite Bedienelement als Stellring ausgebildet, das koaxial zur optischen Achse angeordnet ist.

Insbesondere hat sich als vorteilhaft herausgestellt, eine über den Stellring eingeleitete Bewegung mittels eines zwischen Stellring und Fokussieroptik angeordneten Kurvenbetriebes in eine axiale Bewegung der Fokussieroptik zu überführen.

In einer vorteilhaften Ausführungsform ist vorgesehen, einen Motor zum Antrieb mindestens eine der Fokussiergruppen vorzusehen. Insbesondere hat sich als Motor ein Linearmotor als vorteilhaft herausgestellt.

In einer vorteilhaften Ausführungsform ist vorgesehen, dass eine Fokussieroptik zwischen zwei Anschlagpositionen stufenlos verschiebbar ist.

Weiterhin hat sich als vorteilhaft herausgestellt, dass eine der Fokussieroptiken mittels einer vorgesehenen Rastung auf Vorzugspositionen einstellbar ist.

Vorzugsweise ist eine der Fokussieroptiken stufenlos und die andere mittels einer vorgesehenen Rastung auf Vorzugspositionen einstellbar. Durch Vorsehen der Rastung, kann in vordefinierten großen Sprüngen zwischen verschiedenen Fokusebenen schnell gewechselt werden. Es hat sich insbesondere als vorteilhaft herausgestellt, eine stufenlose Fokussierung für eine Feinfokussierung vorzusehen.

In einer vorteilhaften Weiterbildung ist als erstes Bedienelement ein Bedienelement mit einem Grobtrieb zur Verschiebung der ersten Fokussieroptik mit hoher Geschwindigkeit und einem Feintrieb zum Antrieb der ersten Fokussieroptik mit geringer Geschwindigkeit vorgesehen. Somit kann zum einen eine Fokussierung mittels der zweiten Fokussieroptik durchgeführt werden und zusätzlich mittels dem Grob- und Feintrieb eine Fokussierung durch die erste Fokussieroptik durchgeführt werden. Es stehen somit zur Fokussierung drei Bedienelemente zur Verfügung. Es kann insbesondere schnell von einer Fokusebene im Fernbereich auf eine Fokusebene im Nahbereich durch einer der Bedienelemente zur Fokussierung schnell sprunghaft gewechselt werden.

Es hat sich als vorteilhaft herausgestellt, das Objektiv objektivseitig mit einer Schutzscheibe zu versehen. Mittels dieser Schutzscheibe kann das Teleskop vor Schmutz und Staub geschützt werden. Weiterhin kann durch diese Schutzscheibe das Teleskop abgedichtet werden und dadurch gewährleistet werden, dass zwischen dieser Schutzscheibe und dem Okular eingeschlossene Gasvolumen konstant bleibt.

Es hat sich als vorteilhaft herausgestellt, den Stellring drehbar und axial fest zu lagern.

Es hat sich als vorteilhaft herausgestellt, den Stellring drehbar und axial fest zu lagern. Dadurch kann gewährleistet werden, dass durch den Stellring keine Undichtigkeit in Bezug auf Gas und Flüssigkeiten während der gesamten Nutzungszeit des Fernglases entstehen. Durch diese Maßnahme der axial festen Lagerung des Stellringes wird verhindert, dass Querkräfte auf die vorgesehenen Dichtungen des Stellringes eingeleitet werden. Dadurch wird die Beanspruchung und der Verschleiß der Dichtungen stark reduziert.

Es hat sich als vorteilhaft herausgestellt, das Objektiv mit einem in axialer Richtung ausziehbaren Blendschutz zu versehen. Durch diese Maßnahme wird dem Benutzer die Möglichkeit bereitgestellt, bei auftretender Blendung den Blendschutz einfach auszuziehen. Der Benutzer des Teleskops muss zum einen den als Zubehör üblichen Blendschutz mit sich führen und zuvor dann noch montieren. Dadurch wird das Handling wesentlich vereinfacht.

Es hat sich als vorteilhaft herausgestellt, dass das Teleskop ohne Berücksichtigung des Blendenschutzes eine konstante Baulänge aufweist. Damit bleibt das im Teleskop eingeschlossene Gasvolumen, sofern das Teleskop gasdicht ist, konstant.

In einem vorteilhaften Ausführungsbeispiel ist vorgesehen, dass die Objektivlinsengruppe mittels einer Rastung auf Vorzugspositionen einstellbar ist. Damit kann der Benutzer durch Verstellung der Position der Objektivlinsengruppe um ein vorbestimmtes Maß zwischen vorbestimmten Fokusebenen sprunghaft wechseln. Zwischen den Vorzugspositionen kann weiterhin ein Bereich vorgesehen sein, in dem eine kontinuierliche Verstellung der Objektivlinsengruppe möglich ist. Der Verstellung der Fokussierung mittels der Objektivlinsengruppe sind Anschläge zugeordnet, die eine Verstellung um ein vorbestimmtes Maß dem Benutzer signalisieren.

Im folgenden wird anhand eines Ausführungsbeispiels die Erfindung näher beschrieben. Es zeigt:
- Figur 1:: Teleskop in Form eines monokularen Fernrohres im Längsschnitt;
- Figur 2:: Längsschnitt durch das Objektiv;
- Figur 3:: Darstellung von Linsenschnitten zu verschiedenen Fokussierpositionen.

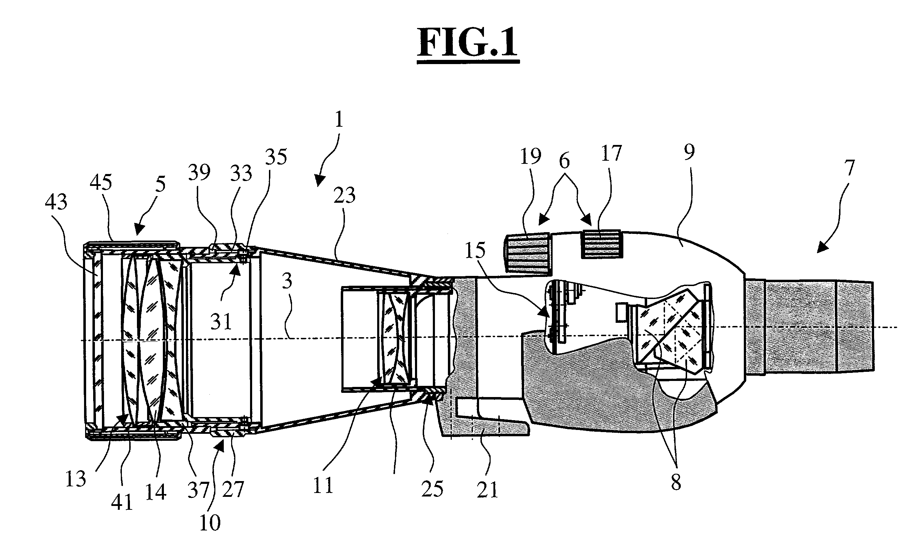

Anhand von Figur 1 wird zunächst der prinzipielle Aufbau anhand eines monokularen Fernrohres 1 prinzipiell beschrieben. Das monokulare Fernrohr 1 weist ein Objektiv 5 und ein Okular 7 auf. Das Okular 7 ist wechselbar und ist mit einer Mechanik zum Verbinden mit einem Gehäuse 9 des Fernrohres 1 versehen, wie in der DE 10121439 beschrieben, die explizit zum Offenbarungsinhalt dieser Anmeldung gehören soll. Als Okular kann insbesondere auch ein Variookular vorgesehen sein.

In dem Gehäuse 9 ist eine erste Fokussieroptik 11 axial verschiebbar gelagert. In dem dargestellten Ausführungsbeispiel ist die erste Fokussieroptik zwischen Okular und Objektiv angeordnet. Zur Verschiebung der ersten Fokussieroptik 11 ist ein Grobtrieb 17 und ein Feintrieb 19 als erstes Bedienelement 6 vorgesehen, die über ein Getriebe 15 mit der ersten Fokussieroptik 11 verbunden sind. Der Aufbau und die Funktionsweise des Grob- und Feintriebes sind in der DE 10121074 näher beschrieben, die ausdrücklich zum Offenbarungsinhalt dieser Anmeldung gehören soll.

Das Gehäuse 9 weist auf der dem Objektiv 5 zugewandten Seite ein Außenprofil 25 auf, durch das ein Objektivgehäuse 23, dass auf der dem Okular 7 zugewandten Seite ein gegensinniges Innenprofil 24 aufweist, mit dem Gehäuse 9 verbunden werden kann. Weiterhin ist das Fernrohr in einem Mittenbereich mit einer Stativbefestigung 21 versehen. Es könnte auch vorgesehen sein, das Objektivgehäuse 23 am einen Ende mit der Stativbefestigung 21 zu verbinden, die ihrerseits am anderen Ende mit dem Gehäuse 9 verbunden ist. Die gezeigte Ausführung weist gegenüber der zuvor beschriebenen Ausführung den Vorteil auf, dass Verbindungsstellen minimiert sind.

Das Objektivgehäuse 23 weist einen konischen Bereich auf, wobei die erste Fokussieroptik 11 in diesen Bereich hineinragt. An diesen konischen Bereich schließt sich ein tubusförmiger Bereich des Objektivgehäuses 23 an, wobei dieser tubusförmige Bereich von einem Stellring 27 als zweites Bedienelement 10 koaxial umgeben wird. Der Stellring 27 ist auf seiner radialen Innenseite mit einer Axialführung 33 versehen, in die ein Führungsstift 35 eines Kurvenbetriebes 31 eingreift. Der Führungsstift 35 ist mit einer Fassung 37 einer Objektivlinsengruppe 13 fest verbunden, die durch einen Objektivtubus 41 geführt wird. Die Objektivlinsengruppe 13 stellt in diesem Ausführungsbeispiel zweite Fokussieroptik 12 dar.

Das Objektiv 5 kann über diese verschiebbare Objektivlinsengruppe 13 hinaus weitere Objektivlinsen aufweisen, die vorzugsweise ortsfest gelagert sind.

Auf der dem Objekt zugewandten Seite ist das Objektivgehäuse 23 mit dem Objektivtubus 41 fest verbunden. Durch diesen Objektivtubus wird der Stellring 27 axial geführt, so dass der Stellring 27 bei Drehung seine Position in bezug auf die axiale Richtung des Fernrohres nicht verändern kann. Zur Gewährleistung der Dichtigkeit sind Dichtungen 39 vorgesehen. Da der Stellring 27 keine Bewegung in axialer Richtung ausführt, werden somit auf diese Dichtungen keine Querkräfte übertragen.

In dem Objektivgehäuse 23 ist in dem Bereich zwischen Stellring 27 und Fassung 37 eine Kurve, in der sich der Führungsstift 35 bewegen kann, in Form einer Ausnehmung ausgebildet. Es könnte jedoch genauso gut in dem Gehäuse des Objektives 23 eine Axialführung ausgebildet sein und die Führungskurve zur Führung des Führungsstiftes 35 könnte auf der Innenseite des Stellringes ausgebildet sein. Weitere Anordnungen von Axialführung und Führungskurve sind denkbar.

Anstelle der Betätigung des Stellringes 27 zur axialen Verschiebung der Objektivlinsengruppe 13 könnte auch ein motorischer Stellantrieb, nicht dargestellt, vorgesehen sein. Durch den motorischen Stellantrieb könnte durch Betätigung eines Betätigungsknopfes, nicht dargestellt, eine entsprechende axiale Bewegung der Objektivlinsengruppe 13 ausgeführt werden. Für eine derartige Anwendung ist insbesondere die Verwendung von Linearmotoren vorteilhaft, da die Bewegung des Linearmotors, ohne dass ein Getriebe für eine Umwandlung einer Rotationsbewegung in eine Linearbewegung erforderlich ist, eingesetzt werden können. Solche Linearmotoren, die sich durch einen geringen Energieverbrauch auszeichnen, sind bereits als Standartbauteile verfügbar.

Der Objektivtubus 41 ist auf der dem Objekt zugewandten Seite koaxial von einem Blendschutz 45 umgeben. Der Blendschutz 45 ist axial verschiebbar auf dem Tubus 41 gelagert. Damit sich die eingestellte Position des Blendschutzes 45 nicht ungewollt verändert sind Reibelemente 47, wie beispielsweise Filz, vorgesehen. Eine maximale Auszugsposition des Blendschutzes 45 ist durch einen am Objektivtubus 41 ausgebildeten Vorsprung 49 und einen am Blendschutz 45 ausgebildeten Vorsprung 51, die bei maximaler Auszugsposition des Blendschutz 45 aufeinanderschlagen, gesichert. Zur Fixierung einer Schutzscheibe 43 ist ein Ringelement 44 vorgesehen, dass mit dem Objektivtubus 41 fest verbunden wird.

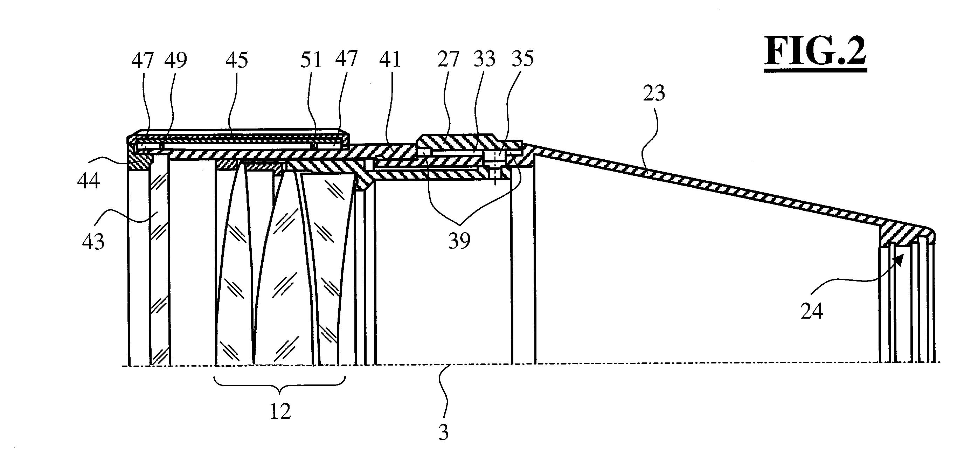

In Figur 2 ist ein vergrößerter Schnitt durch das Objektiv dargestellt, bei dem insbesondere der Stellring 27 mit dem Kurvengetriebe 31 besser zu erkennen sind. Ein derartiger Stellring könnte auch als erstes Bedienelement vorgesehen werden.

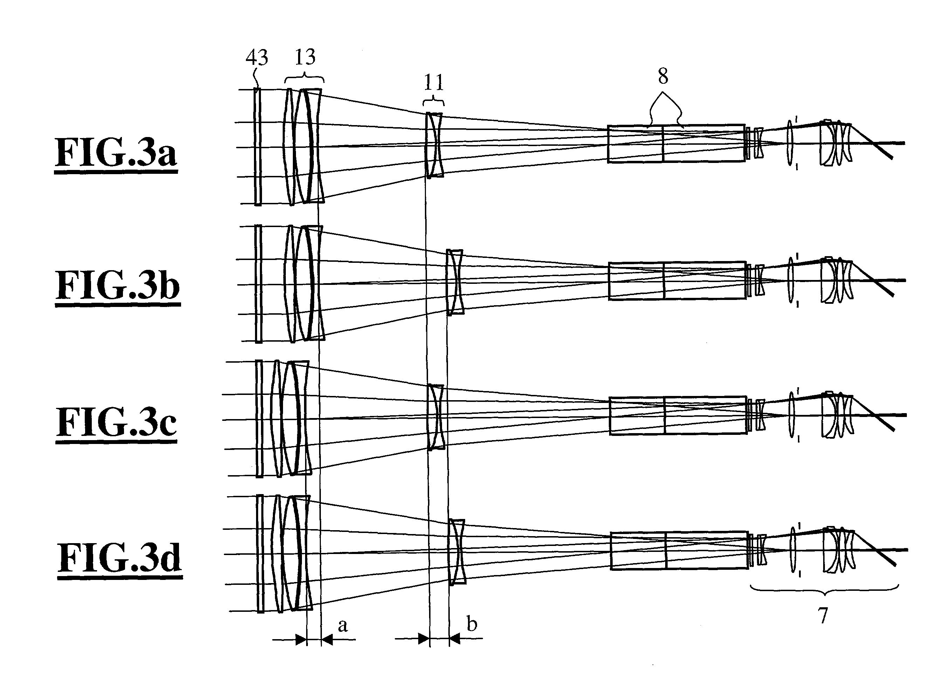

In Figur 3a ist die Position der Linsen dargestellt, bei der auf die Entfernung unendlich fokussiert ist. Die Linsen des Okulars sind mit 7 gekennzeichnet. Es schließen sich die bereits in Fig. 1 gezeigten Prismen 8 an. Die Linsen der ersten Fokussieroptik 11 befinden sich in der objektseitigsten Position, die sie einnehmen können. Die Objektivlinsengruppe 13 befindet sich in der okularseitigsten Position, die sie einnehmen kann.

In Figur 3b ist die erste Fokussieroptik 11 in der dem Okular am nächsten angeordneten Position. Die Objektivlinsengruppe 13 ist wiederum in der Position mit dem geringst möglichen Abstand zum Okular 7 bzw. zur Prismenanordnung 8, angeordnet. Bei dieser Linsenanordnung ist auf eine Entfernung von 5 Metern fokussiert.

In Figur 3c ist auf eine Entfernung von 6,7 Meter fokussiert. Die Linsen der Objektivlinsengruppe 13 sind in der von der Prismenanordnung 8 weitmöglichst entferntesten Position angeordnet. Die Fokussieroptik ist ebenfalls in der am weitmöglichst entferntesten Position von der Prismenanordnung 8 angeordnet.

Bei der in Figur 3d dargestellten Linsenanordnung ist auf eine Entfernung von 3 Metern fokussiert. Die Objektivlinsengruppe 13 befindet sich in der weitmöglichst von den Prismen angeordneten Position und die Fokussieroptik 11 befindet sich in der nächstmöglichsten Position zu den Prismen 8.

Wie aus den Figuren 3a bis 3d zu erkennen ist, konnte der Fokussierbereich von unendlich bis 5 Meter auf den Bereich von unendlich bis 3 Meter in diesem konkreten Ausführungsbeispiel durch die axiale Verschiebbarkeit der Objektivlinsengruppe 13 vergrößert werden. Diese Vergrößerung des Fokussierbereichs bei diesem Fernrohr ist aufgrund der axialen Verschiebung der Objektivlinsengruppe 13 mit keiner Verschlechterung der optischen Abbildungsqualität verbunden.

### Bezugszeichenliste:

- 1: Teleskop, monokulares Fernrohr
- 3: optische Achse
- 5: Objektiv
- 6: 1. Bedienelement
- 7: Okular
- 8: Prismen
- 9: Gehäuse
- 10: 2. Bedienelement
- 11: erste Fokussieroptik
- 12: zweite Fokussieroptik
- 13: Objektivlinsengruppe
- 14: Objektivlinse
- 15: Getriebe
- 17: Grobtrieb
- 19: Feintrieb
- 21: Stativ
- 23: Objektivgehäuse
- 24: Innenprofil
- 25: Außenprofil
- 27: Stellring
- 31: Kurvengetriebe
- 33: Axialführung
- 35: Führungsstift
- 37: Fassung
- 39: Dichtung
- 41: Objektivtubus
- 43: Schutzscheibe
- 44: Ringelement
- 45: Blendschutz
- 47: Reibelement

- 49: Vorsprung
- 51: Vorsprung

## Patentansprüche

1. Teleskop mit einer durch die optischen Elemente des Teleskops festgelegte optische Achse, umfassend ein Okular, ein Objektiv und eine erste Fokussieroptik, die entlang der optischen Achse zum Fokussieren verschiebbar gelagert ist, **dadurch gekennzeichnet, dass** das Teleskop (1) eine zweite Fokussieroptik (12), die zum Fokussieren entlang der optischen Achse verschiebbar gelagert ist, aufweist.

2. Teleskop nach Anspruch 1, **dadurch gekennzeichnet, dass** eine der Fokussieroptiken (11) zwischen Okular (7) und Objektiv (5) angeordnet ist.

3. Teleskop nach Anspruch 1 oder Anspruch 2, **dadurch gekennzeichnet, dass** eine der Fokussieroptik (12) im Objektiv (5) angeordnet ist.

4. Teleskop mindestens nach Anspruch 1, **dadurch gekennzeichnet, dass** der ersten Fokussieroptik (11) ein erstes Bedienelement (6) und der zweiten Fokussieroptik (12) ein zweites Bedienelement (10) zugeordnet ist.

5. Teleskop nach Anspruch 5, **dadurch gekennzeichnet, dass** als zweites Bedienelement (10) ein Stellring (27) vorgesehen ist, der koaxial zur optischen Achse (3) angeordnet ist.

6. Teleskop nach Anspruch 6, **dadurch gekennzeichnet, dass** der Stellring (27) über ein Kurvengetriebe(31) mit der zweiten Fokussieroptik (12) verbunden ist.

7. Teleskop nach Anspruch 1, **dadurch gekennzeichnet, dass** ein Motor zum Antrieb mindestens einer der Fokussiergruppen vorgesehen ist.

8. Teleskop nach Anspruch 7, **dadurch gekennzeichnet, dass** als Motor ein Linearmotor vorgesehen ist.

9. Teleskop nach Anspruch 1, **dadurch gekennzeichnet, dass** eine Fokussieroptik (11) zwischen zwei Anschlagpositionen stufenlos verschiebbar ist.

10. Teleskop nach Anspruch 1, Anspruch 2 oder Anspruch 10, **dadurch gekennzeichnet, dass** eine der Fokussieroptiken (12) einer vorgesehenen Rastung auf Vorzugspositionen einstellbar ist.

11. Teleskop mindestens nach Anspruch 1, **dadurch gekennzeichnet, dass** das Objektiv (5) objektivseitig eine Schutzscheibe (43) aufweist.

12. Teleskop nach Anspruch 2 und Anspruch 6, **dadurch gekennzeichnet, dass** der Stellring (27) drehbar und axial fest gelagert ist.

13. Teleskop nach mindestens einem der vorangegangenen Ansprüche, **dadurch gekennzeichnet, dass** das Objektiv (5) einen in axialer Richtung ausziehbaren Blendschutz (45) aufweist.

14. Teleskop nach mindestens einem der vorangegangenen Ansprüche, **dadurch gekennzeichnet, dass** das Teleskop ohne Blendschutz (45) eine konstante Baulänge aufweist.

15. Teleskop nach Anspruch 5, **dadurch gekennzeichnet, dass** als erstes Bedienelement (6) über ein Getriebe(15) mit der ersten Fokussieroptik in Wirkverbindung steht und einen Grobtrieb (17) zur zum Antrieb der ersten Fokussieroptik (11) mit hoher Geschwindigkeit und ein Feintrieb (19) zum Auftrieb der ersten Fokussieroptik (11) mit geringer Geschwindigkeit vorgesehen ist.

16. Teleskop nach mindestens einem der vorangegangenen Ansprüche, wobei das Teleskop ein monokulares Fernglas (1) ist.

17. Teleskop nach Anspruch 15, **dadurch gekennzeichnet, dass** die erste Fokussieroptik (11) zwischen Okular und Objektiv angeordnet ist.
